# EUROPEAN PATENT SPECIFICATION

(11) **EP 4 301 679 B1**
(45) Date of publication and mention of the grant of the patent: **25.11.2026**
(21) Application number: 22710155.7
(22) Date of filing: 01.03.2022
(51) Int. Cl.: B65G 15/10, B65G 21/12, B65G 41/00

(54) **A DEVICE FOR THE TRANSPORT OF CERAMIC SLABS**
VORRICHTUNG ZUM TRANSPORT VON KERAMISCHEN PLATTEN
DISPOSITIF PERMETTANT LE TRANSPORT DE PLAQUES CÉRAMIQUES

(30) Priority: 02.03.2021 IT 202100004889
(43) Date of publication of application: 10.01.2024
(73) Proprietor: System Ceramics S.p.A., 41042 Fiorano Modenese MO (IT)
(72) Inventor: MERIGHI, Enrico, 41057 Castelvetro (Modena) (IT)
(74) Representative: Casadei, Giovanni
(86) International application number: PCT/IB2022/051767
(87) International publication number: WO 2022/185188

(56) References cited:
- CN-A- 111 502 210
- JP-A- S59 143 806
- US-A1- 2009 174 138
- US-A1- 2013 220 777

## Description

The present invention relates to a device for the transport of ceramic slabs.

In the field of the ceramic industry transport devices are widely used comprising one or two pairs of motorised belts, arranged parallel and coplanar so as to define a horizontal transport plane. Such transport devices are used in many steps of the production process, to take the ceramic slabs from one processing step to the next step. The slabs are positioned on motorised belts, in a substantially barycentric position with respect thereto.

In many cases, the distance separating the various motorised belts can be adjusted, using relevant regulation mechanisms, to adapt the width of the transport plane to the dimensions of the slabs.

The evolution of production techniques in the ceramics industry now enables slabs of much larger dimensions to be produced with respect to the more traditional dimensions that can be obtained with less evolved processes. Therefore it often happens that a same production line is called upon to make slabs of different dimensions, from the smaller and more traditional formats to the larger formats.

Current transport devices are not able to adapt effectively to all the slab formats that can be made with modern production lines. The adjustment of the distance separating the belts, especially in the case of slab with larger formats, changes the position of the support areas of the slabs themselves, which often have large unsupported sections or that project in a cantilever fashion from the transport plane. This can cause deformation of the slabs themselves, which bend due to the effect of their own weight, especially during the steps of the process prior to firing.

An example of transport device presently available is disclosed in document US 2009/174138. This device is not suitable to adapt effectively to slab of different formats.

The object of the present invention is to provide a device for the transport of ceramic slabs that enables the drawbacks of the currently available transport devices to be obviated.

The main advantage of the transport device according to the present invention is that it can effectively adapt to the transport of slabs of different dimensions, still offering a balanced and barycentric support which prevents the deformation of the slabs themselves.

Additional features and advantages of the present invention will become more apparent from the following detailed description of an embodiment of the invention, illustrated by way of non-limiting example in the appended figures, in which:

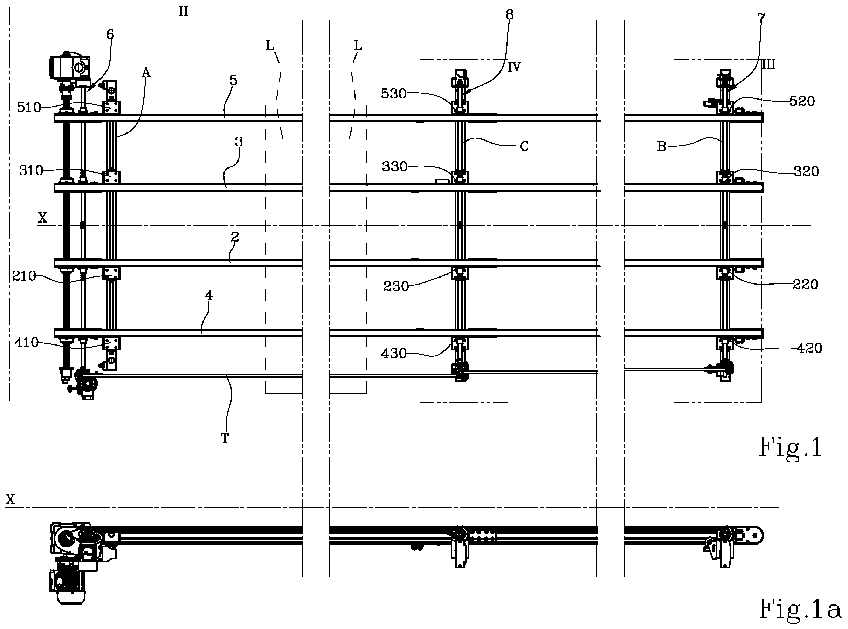

- figure 1 is a top view of the transport device according to the present invention;
- figure 1a shows a side view of the transport device according to the present invention (from the bottom of figure 1);
- figure 2 shows the area II of figure 1 in an enlarged scale;

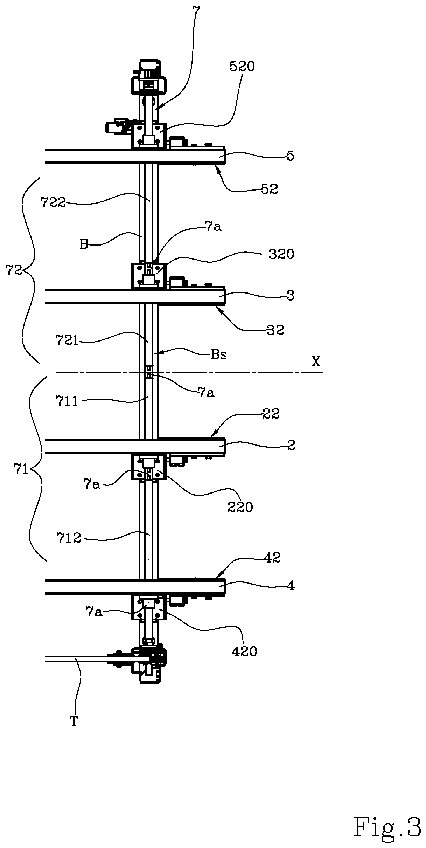

- figure 3 shows the area III of figure 1 in an enlarged scale;

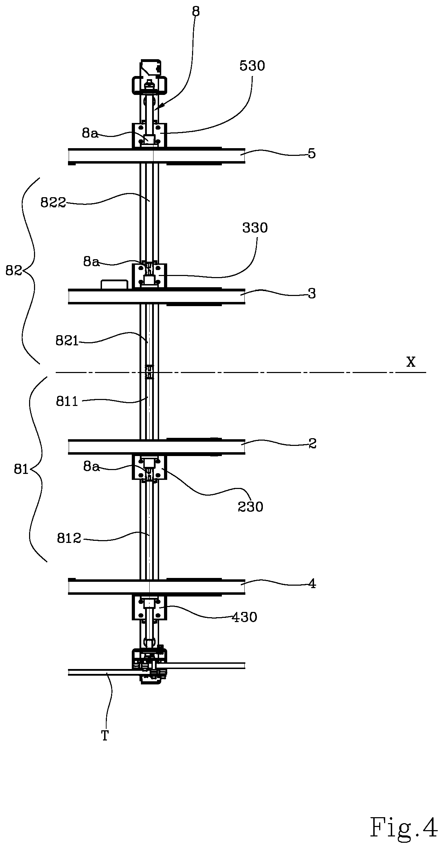

- figure 4 shows the area IV of figure 1 in an enlarged scale.

The device for the transport of ceramic slabs (L) according to the present invention comprises a pair of inner belts (2,3), parallel to a transport direction (x). The belts (2,3) are coplanar to each other, so as to define a substantially horizontal transport plane. Each inner belt (2,3) is associated to a respective support unit (210,220,310,320). Such support units comprise at least one front support (210,310) and at least one rear support (220,320), respectively.

The transport device further comprises a pair of outer belts (4,5), parallel to the transport direction (x) and coplanar to the transport plane. In substance, also the outer belts (4,5) are coplanar to each other and coplanar to the transport plane defined by the inner belts (2,3). Furthermore, the outer belts (4,5) and the inner belts (2,3) are parallel to one another. The outer belts (4,5) are located on opposite sides with respect to the pair of inner belts (2,3), i.e. the pair of inner belts (2,3) is interposed between the two outer belts (4,5). Each outer belt (4,5) is associated to a respective support unit (410,420,510,520). Such support units comprise at least one front support (410,510) and at least one rear support (420,520), respectively.

The inner belts (2,3) and the outer belts (4,5) are arranged symmetrically with respect to a vertical median plane parallel to the transport direction (x). In particular, both the belts of the pair of inner belts (2,3) and the belts of the pair of outer belts (4,5) are arranged symmetrically with respect to the vertical median plane parallel to the transport direction (x).

In the embodiment shown, each inner belt (2,3) is mounted on a respective front pulley (21,31) and on a respective rear pulley (22,32). In a known way, each belt (2,3) is closed in a loop arrangement around at least the front pulley (21,31) thereof and the rear pulley (22,32) thereof. Such pulleys rotate about axes perpendicular to the transport direction (X) and parallel to the transport plane.

In the embodiment shown, each outer belt is mounted on a front pulley (41,51) and on a rear pulley (42,52) rotating about axes perpendicular to the transport direction (X) and parallel to the transport plane. In substance, like the inner belts (2,3) each outer pulley (4,5) is closed in a loop arrangement around at least the front pulley (41,51) thereof and the rear pulley (42,52) thereof. Such pulleys rotate about axes perpendicular to the transport direction (X) and parallel to the transport plane.

Each belt therefore has an upper section, suitable to support the tiles, slidably movable along the transport direction (X), in an advancement direction. Each belt further has a lower section which, overall, moves in the opposite direction with respect to the upper section.

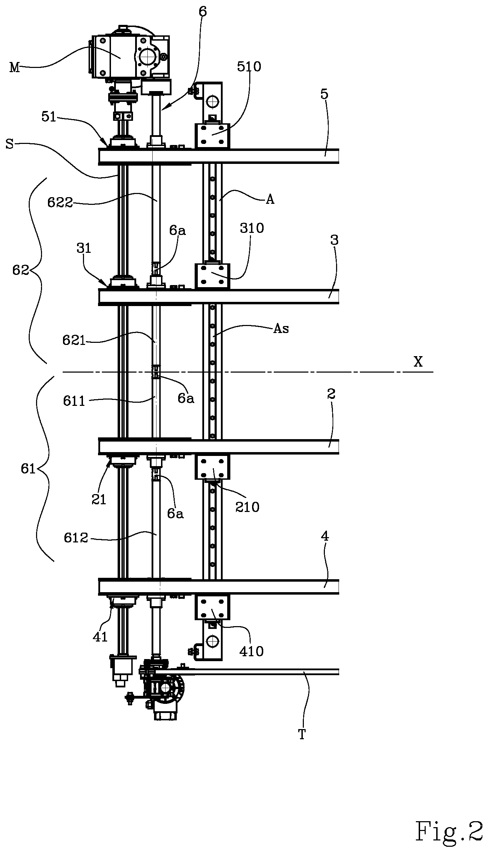

At least one from among the groups of front pulleys is motorised, to enable the sliding of the belts (2,3,4,5). For example, the front pulleys (21,31,41,51) are mounted on a drive shaft (S), visible in figure 2, which is associated to a motor (M), creating a motorisation system that is well known in the sector. The activation of the motor (M) causes the belts (2,3,4,5) to slide along the paths thereof.

In the preferred but not exclusive embodiment shown, each front pulley (21,31,41,51) is associated to a respective front support (210,310,410,510) and each rear pulley (22,32,42,52) is associated to a respective rear support (220,320,420,520). Such front and rear supports are, in turn, associated to a support frame of the device, of which only two cross-members (A,B) are shown.

Advantageously, the front supports (210,310,410,510) are slidably associated to a front bar (6), arranged perpendicular to a transport direction (X) and parallel to the transport plane.

The front bar (6) comprises a first threaded portion (61) and a second threaded portion (62). The threads of the first portion (61) and of the second portion (62) have opposite screwing directions.

The front supports (210,410) of an inner belt (2) and of an outer belt (4) arranged on the same side with respect to the median plane of the device are associated, with a threaded coupling, to the first portion (61) of the front bar (6). The front supports (310,510) of the other inner belt (3) and of the other outer belt (5) are associated, with a threaded coupling, with the second portion (62) of the front bar (6).

In other words, the front support (210) of a first inner belt (2) is associated to the first portion (61) of the front bar (6), whereas the front support (310) of the second inner belt (3) is associated to the second portion (62) of the front bar (6).

In the same way, the front support (410) of a first outer belt (4) is associated to the first portion (61) of the front bar (6), whereas the front support (510) of the second outer belt (5) is associated to the second portion (62) of the front bar (6).

In this way, the rotation of the front bar (6) results in a simultaneous displacement of all the front supports, in opposite directions for the front supports (210,410) coupled to the first portion (61) with respect to the front supports (310,510) coupled to the second portion (62).

In other words, the two portions (61,62) of the front bar (6) made with opposite threads, enable the two belts of the pair of inner belts (2,3) and the two belts of the pair of outer belts (4,5) to be moved away from or towards each other simultaneously, through the rotation of the front bar (6). In this way, also by increasing the distance between the belts of each of the pairs of inner belts (2,3) and outer belts (4,5), to adapt the transport plane to larger slabs, it is possible to maintain a uniform distribution of the resting weight.

A motor means is predisposed to activate the front bar (6) in rotation, so as to displace the front supports (210,310,410,510), in the ways described above, in a perpendicular direction to the transport direction (X) and parallel to the transport plane. The motor means is able to activate the rotation of the front bar (6) in both rotation senses, to cause the nearing or distancing of the belts (2,3,4,5).

Further, the first portion (61) and the second portion (62) respectively comprise a first section (611,621) and a second section (612,622) with threads having a different pitch. The front supports (210,310) of the inner belts (2,3) are coupled to first sections (611,621) of the first portion (61) and of the second portion (62). The front supports (410,510) of the outer belts (4,5) are coupled to second sections (612,622) of the first portion (61) and of the second portion (62).

In practice, the front support (210) of the first inner belt (2) is associated to the first section (611) of the first portion (61), whereas the front support (310) of the second inner belt (3) is associated to the second section (621) of the second portion (62).

In the same way, the front support (410) of the first outer belt (4) is associated to the second section (612) of the first portion (61), whereas the front support (510) of the second outer belt (5) is associated to the second section (622) of the second portion (62).

In this way, as well as causing the simultaneous displacement of all the front supports, in opposite directions for the front supports (210,410) coupled to the first portion (61) with respect to the front supports (310,510) coupled to the second portion, the rotation of the front bar (6) also produces different length displacements between the front supports (210,310) of the inner belts (2,3) and the front supports (410,510) of the outer belts (4,5).

Preferably, the pitch of each second section (612,622) is greater than the pitch of the first section (611,621). In other words, the rotation of the front bar (6) enables the two belts of the pair of inner belts (2,3) and the two belts of the pair of outer belts (4,5) to be moved away from or towards each other simultaneously, for strokes of different lengths. In particular, the distancing strokes performed by the outer belts (4,5) are larger than the distancing strokes performed by the inner belts (2,3). In the event of large format ceramic slabs, the outer belts (4,5) are therefore located closer to the edges of the slabs, making the distribution of the resting weight of the slabs more uniform. The front supports (210,310,410,510) are slidably associated to the support frame of the transport device. In the embodiment shown, the front supports are associated to the front cross member (A) by means of a sliding guide (As), oriented parallel to the transport plane and perpendicular to the transport direction (x). In substance, the sliding guide of the front supports (210,310,410,510) is parallel to the axis of rotation of the front bar (6).

For each belt (2,3,4,5), a connection means is provided to connect the front supports (210,310,410,510) and the rear supports (220,320,420,520) to one another. Such connection means is structured so that each rear support follows the front support of the same belt in the displacements caused by the front bar (6).

In the preferred but not exclusive embodiment shown, the rear supports (220,320,420,520) are slidably associated to a rear bar (7), arranged parallel to the front bar (6), i.e. perpendicular to the transport direction (X) and parallel to the transport plane.

The rear bar (7) comprises a first threaded portion (71) and a second threaded portion (72). The threads of the first portion (71) and of the second portion (72) have opposite screwing directions. The threads of the rear bar (7) are exactly the same as the threads of the front bar (6).

The rear supports (220,420) of an inner belt (2) and of an outer belt (4) arranged on the same side with respect to the median plane of the device are associated, with a threaded coupling, to the first portion (71) of the second bar (7). The rear supports (320,520) of the other inner belt (3) and of the other outer belt (5) are associated, with a threaded coupling, to the second portion (72) of the rear bar (7).

In other words, the rear support (220) of a first inner belt (2) is associated to the first portion (71) of the rear bar (7), whereas the rear support (320) of the second inner belt (3) is associated to the second portion (72) of the rear bar (7).

In the same way, the rear support (420) of a first outer belt (4) is associated to the first portion (71) of the rear bar (7), whereas the rear support (520) of the second outer belt (5) is associated to the second portion (72) of the rear bar (7).

In this way, the rotation of the rear bar (6), which is simultaneous to the rotation of the front bar (6), produces a simultaneous displacement of all the rear supports, in opposite directions for the rear supports (220,420) coupled to the first portion (71) with respect to the rear supports (320,520) coupled to the second portion (72). The rear supports are displaced simultaneously while maintaining the alignment with the front supports.

In the embodiment in which the first portion (61) and the second portion (62) of the front bar (6) respectively comprise a first section (611,621) and a second section (612,622) with threads having a different pitch, also the first portion (71) and the second portion (72) respectively comprise a first section (711,721) and a second section (712,722) with threads having a different pitch. The threads of the first portion (71) and of the second portion (62) of the rear bar (6) are the same as the threads of the first portion (61) and of the second portion (62) of the front bar (6). In that case, if the same solution is adopted for the front bar (6), the pitch of each second section (712,722) is greater than the pitch of the first section (711,721).

A motor means is predisposed to activate the rear bar (7) in rotation, so as to displace the rear supports (220,320,420,520) along the rear bar (7), in a perpendicular direction to the transport direction (X) and parallel to the transport plane. The motor means for the rotation of the rear bar (7) may be dedicated to the rear bar (7) itself, or may be in common with the front bar (6). In other words, a single rotary actuator, for example an electric motor, can be connected to the front bar (6) and to the rear bar (7), for example by means of a transmission belt (T) associated to toothed wheels solidly constrained to corresponding ends of the bars (6,7).

In an advantageous embodiment, the front bar (6) is formed by two or more parts, rigidly connected to one another at joints (6a). Each joint (6a) is structured to removably constrain two adjacent portions of the front bar (6). Various joint solutions are known to a person skilled in the art, and will not be described in further detail. The possibility of disconnecting one or more parts of the front bar (6) substantially enables an access to be created for removing or mounting a belt (2,3,4,5). Preferably, the joints (6a) are located in proximity to the front supports (210,310,410,510). This facilitates the dismounting of the various belts (2,3,4,5).

In the same way, also the rear bar (7) can be made in two or more parts, rigidly connected to one another at joints (7a). Each joint (7a) is structured to removably constrain two adjacent portions of the rear bar (7), in the same way as the solution described for the front bar (6), and for the same purposes of facilitating the dismounting and remounting of the belts (2,3,4,5). Like with the front bar (6), the joints (7a) are preferably located in proximity to the rear supports (220,320,420,520).

In a possible embodiment, the support units of each belt (2,3,4,5) can be provided with intermediate supports (230,330,430,530) located between the front supports (210,310,410,510) and the rear supports (220,320,420,520). Such intermediate supports are associated to the respective belt (2,3,4,5) in an intermediate area, for supporting the respective belt especially in the case in which it has a greater length.

In the preferred but not exclusive embodiment shown, the intermediate supports are slidably associated to an intermediate bar (8), arranged parallel to the front bar (6) and to the rear bar (7), i.e. perpendicular to the transport direction (X) and parallel to the transport plane.

The intermediate bar (8) comprises a first threaded portion (81) and a second threaded portion (82). The threads of the first portion (81) and of the second portion (82) have opposite screwing directions. The threads of the intermediate bar (8) are exactly the same as the threads of the front bar (6) and of the rear bar (7).

The intermediate supports of an inner belt (2) and of an outer belt (4) arranged on the same side with respect to the median plane of the device are associated, with a threaded coupling, to the first portion (81) of the intermediate bar. The intermediate supports of the other inner belt (3) and of the other outer belt (5) are associated, with a threaded coupling, to the second portion (82) of the intermediate bar.

In other words, the intermediate support of a first inner belt (2) is associated to the first portion (81) of the intermediate bar, whereas the intermediate support of the second inner belt (3) is associated to the second portion (82) of the intermediate bar (8).

In the same way, the rear support (430) of a first outer belt (4) is associated to the first portion (81) of the intermediate bar (8), whereas the rear support (530) of the second outer belt (5) is associated to the second portion (82) of the intermediate bar (8).

In this way, the rotation of the intermediate bar (8), which is simultaneous to the rotation of the front bar (6) and of the rear bar (7), produces a simultaneous displacement of all the intermediate supports, in opposite directions for the intermediate supports coupled to the first portion (81) with respect to the intermediate supports coupled to the second portion (82). The intermediate supports are displaced simultaneously and maintaining the alignment with the front supports and the rear supports.

In the embodiment in which the first portion (61) and the second portion (62) of the front bar (6) and the first portion (71) and the second portion (72) of the rear bar (7) respectively comprise a first section (611,621,711,721) and a second section (612,622,712,722) with threads having a different pitch, also the first portion (81) and the second portion (82) of the intermediate bar (8) respectively comprise a first section (811,821) and a second section (812,822) with threads having a different pitch. The threads of the first portion (81) and of the second portion (82) of the intermediate bar (8) are the same as the threads of the first portion (61) and of the second portion (62) of the front bar (6) and the threads of the first portion (71) and the second portion (72) of the rear bar (7).

A motor means is predisposed to activate the intermediate bar (8) in rotation, so as to displace the intermediate supports along the intermediate bar (8), in a perpendicular direction to the transport direction (X) and parallel to the transport plane. The motor means for the rotation of the intermediate bar (8) may be dedicated to the intermediate bar (8), or may be in common with the front bar (6) and/or with the rear bar (7). In other words, a single rotary actuator, for example an electric motor, can be connected to the front bar (6), to the rear bar (7) and to the intermediate bar (8), for example by means of a transmission belt (T) associated to toothed wheels solidly constrained to corresponding ends of the bars (6,7,8).

Also the intermediate bar (8) can be made in two or more parts, rigidly connected to one another at joints (8a). Each joint (8a) is structured to rigidly constrain two adjacent portions of the intermediate bar (8), in the same way as the solution described for the front bar (6) and for the rear bar (7), and for the same purposes of facilitating the dismounting and remounting of the belts (2,3,4,5). The joints (8a) are preferably located in proximity to the intermediate supports (230,330,430,530).

## Claims

1. A device for the transport of ceramic slabs (L), comprising:
a pair of inner belts (2,3), parallel to a transport direction (x) and coplanar to a transport plane, each of which is associated to a respective support unit (210,220,310,320) which comprises at least one front support (210,310) and at least one rear support (220,320), respectively;
a pair of outer belts (4,5), parallel to a transport direction (x) and coplanar to the transport plane, each of which is associated to a respective support unit (410,420,510,520) which comprises at least one front support (410,510) and at least one rear support (420,520);
wherein:
the pair of inner belts (2,3) is interposed between the two outer belts (4,5);
said front supports (210,310,410,510) of the belts (2,3,4,5) are slidably associated to a front bar (6), arranged perpendicular to a transport direction (X) and parallel to the transport plane;
the front bar (6) comprises a first threaded portion (61) and a second threaded portion (62), in which the threads of the first portion (61) and of the second portion (62) are screwable in opposite directions;
the front supports (210,410) of an inner belt (2) and of an outer belt (4) are associated, by a threaded coupling, to the first portion (61) of the front bar (6);
the front supports (310,510) of the other inner belt (3) and of the other outer belt (5) are associated, by a threaded coupling, to the second portion (62) of the front bar (6);
motor means is predisposed to activate the front bar (6) in rotation, so as to displace the front supports (210,310,410,510) along the front bar (6), in a perpendicular direction with respect to the transport direction (X) and parallel to the transport plane;
**characterised in that** the first portion (61) and the second portion (62) respectively comprise a first section (611,621) and a second section (612,622) with threads having a different pitch.

2. The transport device according to claim 1, wherein the pitch of each second section (612,622) is greater than the pitch of the first section (611,621).

3. The transport device according to claim 1, wherein:
the rear supports (220,320,420,520) are slidably associated to a rear bar (7), arranged parallel to the front bar (6), i.e. perpendicular to the transport direction (X) and parallel to the transport plane;
the rear bar (7) comprises a first threaded portion (71) and a second threaded portion (72), wherein the threads of the first portion (71) and of the second portion (72) have opposite screwing directions;
the rear supports (220,420) of an inner belt (2) and of an outer belt (4) are associated, by a threaded coupling, to the first portion (71) of the second bar (7);
the rear supports (320,520) of the other inner belt (3) and of the other outer belt (5) are associated, by a threaded coupling, to the second portion (72) of the rear bar (7);
motor means is predisposed to activate the rear bar (7) in rotation, so as to displace the rear supports (220,320,420,520) along the rear bar (7), in a perpendicular direction with respect to the transport direction (X) and parallel to the transport plane,
wherein the first portion (71) and the second portion (72) comprise, respectively, a first section (711,721) and a second section (712,722) with threads having a different pitch.

4. The transport device according to claim 3, wherein the pitch of each second section (712,722) is greater than the pitch of the first section (711,721).

5. The transport device according to one of the preceding claims, wherein:
each inner belt (2,3) is mounted on a front pulley (21,31) and on a rear pulley (22,32) rotating about axes perpendicular to the transport direction (X) and parallel to the transport plane;
each outer belt (4,5) is mounted on a front pulley (41,51) and on a rear pulley (42,52) rotating about axes perpendicular to the transport direction (X) and parallel to the transport plane;
each front pulley (21,31,41,51) is associated to a respective front support (210,310,410,510) and each rear pulley (22,32,42,52) is associated to a respective rear support (220,320,420,520).

6. The device according to claim 3, wherein the support units of each belt (2,3,4,5) comprise intermediate supports (230,330,430,530) located between the front supports (210,310,410,510) and the rear supports (220,320,420,520).

7. The device according to claim 6, wherein the intermediate supports are slidably associated to an intermediate bar (8), arranged parallel to the front bar (6) and to the rear bar (7), i.e. perpendicular to the transport direction (X) and parallel to the transport plane.

8. The device according to claim 7, wherein the intermediate bar (8) comprises a first threaded portion (81) and a second threaded portion (82), the threads of which are identical to the threads of the first portion (61) and of the second portion (62) of the front bar (6).

9. The device according to one of the preceding claims, wherein the front bar (6) is formed by two or more parts, rigidly connected to one another at joints (6a), each of which is structured to removably constrain two adjacent portions of the front bar (6).

10. The device according to one of claims 3 to 9, wherein the rear bar (7) is formed by two or more parts, rigidly connected to one another at joints (7a), each of which is structured to removably constrain two adjacent portions of the rear bar (7).

## Patentansprüche

1. Vorrichtung zum Transport von keramischen Platten (L), umfassend:
ein Paar von inneren Bändern (2, 3) parallel zu einer Transportrichtung (x) und in der gleichen Ebene liegend mit einer Transportebene, die jeweils mit einer jeweiligen Stützeinheit (210, 220, 310, 320) verknüpft sind, die mindestens eine vordere Stütze (210, 310) beziehungsweise mindestens eine hintere Stütze (220, 320) umfasst;
ein Paar von äußeren Bändern (4, 5) parallel zu einer Transportrichtung (x) und in der gleichen Ebene liegend mit einer Transportebene, die jeweils mit einer jeweiligen Stützeinheit (410, 420, 510, 520) verknüpft sind, die mindestens eine vordere Stütze (410, 510) und mindestens eine hintere Stütze (420, 520) umfasst,
wobei:
das Paar von inneren Bändern (2, 3) zwischen den beiden äußeren Bändern (4, 5) eingesetzt ist;
die vorderen Stützen (210, 310, 410, 510) der Bänder (2, 3, 4, 5) verschiebbar mit einem vorderen Stab (6) verknüpft sind, der senkrecht zu einer Transportrichtung (X) und parallel zu der Transportebene angeordnet ist;
der vordere Stab (6) einen ersten Gewindeabschnitt (61) und einen zweiten Gewindeabschnitt (62) umfasst, wobei die Gewinde des ersten Abschnitts (61) und des zweiten Abschnitts (62) in entgegengesetzte Richtungen schraubbar sind;
die vorderen Stützen (210, 410) eines inneren Bands (2) und eines äußeren Bands (4) durch eine Gewindekupplung mit dem ersten Abschnitt (61) des vorderen Stabs (6) verknüpft sind;
die vorderen Stützen (310, 510) des anderen inneren Bands (3) und des anderen äußeren Bands (5) durch eine Gewindekupplung mit dem zweiten Abschnitt (62) des vorderen Stabs (6) verknüpft sind;
Motormittel vorbereitet sind, um den vorderen Stab (6) in Drehung zu versetzen, sodass die vorderen Stützen (210, 310, 410, 510) entlang des vorderen Stabs (6) in eine senkrechte Richtung in Bezug auf die Transportrichtung (X) und parallel zu der Transportebene versetzt werden,
**dadurch gekennzeichnet, dass** der erste Abschnitt (61) und der zweite Abschnitt (62) jeweils einen ersten Teilabschnitt (611, 621) und einen zweiten Teilabschnitt (612, 622) mit Gewinden, die eine unterschiedliche Steigung aufweisen, umfassen.

2. Transportvorrichtung nach Anspruch 1, wobei die Steigung jedes zweiten Teilabschnitts (612, 622) größer als die Steigung des ersten Teilabschnitts (611, 621) ist.

3. Transportvorrichtung nach Anspruch 1, wobei:
die hinteren Stützen (220, 320, 420, 520) verschiebbar mit einem hinteren Stab (7) verknüpft sind, der parallel zu dem vorderen Stab (6), d. h.
senkrecht zu der Transportrichtung (X) und parallel zu der Transportebene, angeordnet ist;
der hintere Stab (7) einen ersten Gewindeabschnitt (71) und einen zweiten Gewindeabschnitt (72) umfasst, wobei die Gewinde des ersten Abschnitts (71) und des zweiten Abschnitts (72) entgegengesetzte Schraubrichtungen aufweisen;
die hinteren Stützen (220, 420) eines inneren Bands (2) und eines äußeren Bands (4) durch eine Gewindekupplung mit dem ersten Abschnitt (71) des zweiten Stabs (7) verknüpft sind;
die hinteren Stützen (320, 520) des anderen inneren Bands (3) und des anderen äußeren Bands (5) durch eine Gewindekupplung mit dem zweiten Abschnitt (72) des hinteren Stabs (7) verknüpft sind;
Motormittel vorbereitet sind, um den hinteren Stab (7) in Drehung zu versetzen, sodass die hinteren Stützen (220, 320, 420, 520) entlang des hinteren Stabs (7) in eine senkrechte Richtung in Bezug auf die Transportrichtung (X) und parallel zu der Transportebene versetzt werden,
wobei der erste Abschnitt (71) und der zweite Abschnitt (72) jeweils einen ersten Teilabschnitt (711, 721) und einen zweiten Teilabschnitt (712, 722) mit Gewinden, die eine unterschiedliche Steigung aufweisen, umfassen.

4. Transportvorrichtung nach Anspruch 3, wobei die Steigung jedes zweiten Teilabschnitts (712, 722) größer als die Steigung des ersten Teilabschnitts (711, 721) ist.

5. Transportvorrichtung nach einem der vorhergehenden Ansprüche, wobei:
jedes innere Band (2, 3) auf einer vorderen Riemenscheibe (21, 31) und einer hinteren Riemenscheibe (22, 32) montiert ist, die sich um Achsen senkrecht zu der Transportrichtung (X) und parallel zu der Transportebene drehen;
jedes äußere Band (4, 5) auf einer vorderen Riemenscheibe (41, 51) und einer hinteren Riemenscheibe (42, 52) montiert ist, die sich um Achsen senkrecht zu der Transportrichtung (X) und parallel zu der Transportebene drehen;
jede vordere Riemenscheibe (21, 31, 41, 51) mit einer jeweiligen vorderen Stütze (210, 310, 410, 510) verknüpft ist und jede hintere Riemenscheibe (22, 32, 42, 52) mit einer jeweiligen hinteren Stütze (220, 320, 420, 520) verknüpft ist.

6. Vorrichtung nach Anspruch 3, wobei die Stützeinheiten jedes Bands (2, 3, 4, 5) Zwischenstützen (230, 330, 430, 530) umfassen, die sich zwischen den vorderen Stützen (210, 310, 410, 510) und den hinteren Stützen (220, 320, 420, 520) befinden.

7. Vorrichtung nach Anspruch 6, wobei die Zwischenstützen verschiebbar mit einem Zwischenstab (8) verknüpft sind, der parallel zu dem vorderen Stab (6) und dem hinteren Stab (7), d. h. senkrecht zu der Transportrichtung (X) und parallel zu der Transportebene, angeordnet ist.

8. Vorrichtung nach Anspruch 7, wobei der Zwischenstab (8) einen ersten Gewindeabschnitt (81) und einen zweiten Gewindeabschnitt (82) umfasst, wobei die Gewinde mit den Gewinden des ersten Abschnitts (61) und des zweiten Abschnitts (62) des vorderen Stabs (6) identisch sind.

9. Vorrichtung nach einem der vorhergehenden Ansprüche, wobei der vordere Stab (6) durch zwei oder mehrere Teile ausgebildet ist, die steif miteinander an Verbindungsstellen (6a), die jeweils strukturiert sind, um zwei benachbarte Abschnitte des vorderen Stabs (6) lösbar zu befestigen, verbunden sind.

10. Vorrichtung nach einem der Ansprüche 3 bis 9, wobei der hintere Stab (7) durch zwei oder mehrere Teile ausgebildet ist, die steif miteinander an Verbindungsstellen (7a), die jeweils strukturiert sind, um zwei benachbarte Abschnitte des hinteren Stabs (7) lösbar zu befestigen, verbunden sind.

## Revendications

1. Dispositif permettant le transport de plaques céramiques (L), comprenant :
une paire de courroies intérieures (2, 3), parallèles à une direction de transport (x) et coplanaires à un plan de transport, chacune étant associée à une unité de support (210, 220, 310, 320) respective qui comprend, respectivement, au moins un support avant (210, 310) et au moins un support arrière (220, 320) ;
une paire de courroies extérieures (4, 5), parallèles à une direction de transport (x) et coplanaires au plan de transport, chacune étant associée à une unité de support (410, 420, 510, 520) respective qui comprend au moins un support avant (410, 510) et au moins un support arrière (420, 520) ;
dans lequel :
la paire de courroies intérieures (2, 3) est interposée entre les deux courroies extérieures (4, 5) ;
lesdits supports avant (210, 310, 410, 510) des courroies (2, 3, 4, 5) sont associés de manière coulissante à une barre avant (6), disposée perpendiculairement à une direction de transport (X) et parallèlement au plan de transport ;
la barre avant (6) comprend une première partie filetée (61) et une seconde partie filetée (62), les filets de la première partie (61) et de la seconde partie (62) pouvant être vissés dans des sens opposés ;
les supports avant (210, 410) d'une courroie intérieure (2) et d'une courroie extérieure (4) sont associés, par un couplage fileté, à la première partie (61) de la barre avant (6) ;
les supports avant (310, 510) de l'autre courroie intérieure (3) et de l'autre courroie extérieure (5) sont associés, par un couplage fileté, à la seconde partie (62) de la barre avant (6) ;
des moyens de moteur sont prédisposés pour activer la barre avant (6) en rotation, de manière à déplacer les supports avant (210, 310, 410, 510) le long de la barre avant (6), dans une direction perpendiculaire par rapport à la direction de transport (X) et parallèle au plan de transport ;
**caractérisé en ce que** la première partie (61) et la seconde partie (62) comprennent, respectivement, une première section (611, 621) et une seconde section (612, 622) dotées de filets présentant un pas différent.

2. Dispositif de transport selon la revendication 1, dans lequel le pas de chaque seconde section (612, 622) est supérieur au pas de la première section (611, 621).

3. Dispositif de transport selon la revendication 1, dans lequel :
les supports arrière (220, 320, 420, 520) sont associés de manière coulissante à une barre arrière (7), disposée parallèlement à la barre avant (6), c'est-à-dire perpendiculairement à la direction de transport (X) et parallèlement au plan de transport ;
la barre arrière (7) comprend une première partie filetée (71) et une seconde partie filetée (72), dans lequel les filets de la première partie (71) et de la seconde partie (72) ont des sens de vissage opposés ;
les supports arrière (220, 420) d'une courroie intérieure (2) et d'une courroie extérieure (4) sont associés, par un couplage fileté, à la première partie (71) de la seconde barre (7) ;
les supports arrière (320, 520) de l'autre courroie intérieure (3) et de l'autre courroie extérieure (5) sont associés, par un couplage fileté, à la seconde partie (72) de la barre arrière (7) ;
des moyens de moteur sont prédisposés pour activer la barre arrière (7) en rotation, de manière à déplacer les supports arrière (220, 320, 420, 520) le long de la barre arrière (7), dans une direction perpendiculaire à la direction de transport (X) et parallèle au plan de transport,
dans lequel la première partie (71) et la seconde partie (72) comprennent, respectivement, une première section (711, 721) et une seconde section (712, 722) dotées de filets présentant un pas différent.

4. Dispositif de transport selon la revendication 3, dans lequel le pas de chaque seconde section (712, 722) est supérieur au pas de la première section (711, 721).

5. Dispositif de transport selon l'une des revendications précédentes, dans lequel :
chaque courroie intérieure (2, 3) est montée sur une poulie avant (21, 31) et sur une poulie arrière (22, 32) tournant autour d'axes perpendiculaires à la direction de transport (X) et parallèles au plan de transport ;
chaque courroie extérieure (4, 5) est montée sur une poulie avant (41, 51) et sur une poulie arrière (42, 52) tournant autour d'axes perpendiculaires à la direction de transport (X) et parallèles au plan de transport ;
chaque poulie avant (21, 31, 41, 51) est associée à un support avant (210, 310, 410, 510) respectif et chaque poulie arrière (22, 32, 42, 52) est associée à un support arrière (220, 320, 420, 520) respectif.

6. Dispositif selon la revendication 3, dans lequel les unités de support de chaque courroie (2, 3, 4, 5) comprennent des supports intermédiaires (230, 330, 430, 530) situés entre les supports avant (210, 310, 410, 510) et les supports arrière (220, 320, 420, 520).

7. Dispositif selon la revendication 6, dans lequel les supports intermédiaires sont associés de manière coulissante à une barre intermédiaire (8), disposée parallèlement à la barre avant (6) et à la barre arrière (7), c'est-à-dire perpendiculairement à la direction de transport (X) et parallèlement au plan de transport.

8. Dispositif selon la revendication 7, dans lequel la barre intermédiaire (8) comprend une première partie filetée (81) et une seconde partie filetée (82), dont les filets sont identiques aux filets de la première partie (61) et de la seconde partie (62) de la barre avant (6).

9. Dispositif selon l'une des revendications précédentes, dans lequel la barre avant (6) est formée de deux ou plusieurs parties, reliées rigidement les unes aux autres au niveau de joints (6a), dont chacun est structuré pour contraindre de manière amovible deux parties adjacentes de la barre avant (6).

10. Dispositif selon l'une des revendications 3 à 9, dans lequel la barre arrière (7) est formée de deux ou plusieurs parties, reliées rigidement les unes aux autres au niveau de joints (7a), dont chacun est structuré pour contraindre de manière amovible deux parties adjacentes de la barre arrière (7).
